# EUROPÄISCHE PATENTANMELDUNG

(11) **EP 2 479 535 A1**
(43) Veröffentlichungstag der Anmeldung: **25.07.2012**
(21) Anmeldenummer: 11450007.7
(22) Anmeldetag: 21.01.2011
(51) Int. Cl.: G01B 11/02, G01B 11/24, G01C 15/00

(54) **Verfahren zur berührungslosen Vermessung**

(71) Anmelder: Sattler AG, 8041 Graz (AT)
(72) Erfinder: Schug, Christoph A., 8010 Graz (AT)
(74) Vertreter: Ellmeyer, Wolfgang

(57) **Zusammenfassung**

Verfahren zur berührungslosen Vermessung der Oberkante (1) eines nach oben offenen Behälters (21), mit den folgenden Schritten:
- Festlegen einer festen Messposition (41) innerhalb des Behälters (21),
- Berührungsloses Messen des Abstands zwischen der festen Messposition (41) und der Oberkante (1) des offenen Behälters (21) an einer Vielzahl von Messpunkten (40) entlang des Behälterumfangs, und
- Berechnen der Koordinaten der Vielzahl der Messpunkte (40) auf Basis der gemessenen Abstände und aus diesen den Verlauf der Oberkante (1).

## Beschreibung

Die Erfindung betrifft ein Verfahren zur berührungslosen Vermessung der Oberkante eines nach oben offenen Behälters.

Nach oben offene Behälter, z. B. Behälter in der Biogasproduktion, aber nicht nur dort, müssen häufig nach der Errichtung mit einem Dach, z. B. mit einem Membran-Dach, aber auch mit anderen Dächern abgedeckt werden. Zur Vorbereitung des Daches vor der Anlieferung, bei Biogas-Membran-Abdeckungen zur Konstruktion und Konfektionierung, muss der Behälter in seinem Naturmaß, d.h. seinem realen Umfang und seiner realen Höhe und in seinen realen Abweichungen von der geplanten Geometrie vermessen werden. Diese Geometrieabweichungen können Unrundheiten oder aber auch Abweichungen von der rechteckigen Form sein.

Das berührungslose Vermessen eines Objektes unter Verwendung eines Laser-Scanners ist bereits aus der AT 006 301 U1 bekannt. Ein Laser-Scanner ist allerdings ein relativ teures aufwändiges Gerät, mit dem man zwei- oder dreidimensional über ein rotierendes Spiegelsystem eine Oberfläche abtasten kann und so ein hoch aufgelöstes Abbild der Oberfläche bekommt. Dieser Scanner hat nun Totbereiche, die beim Tunnelbau genau dort liegen, wo die Referenzpunkte liegen. Man will die Wand scannen, aber die Referenzpunkte liegen in der Röhre. In dem in der AT 006 301 U1 beschriebenen Verfahren schwenkt deshalb der gesamte Scanner definiert einmal mit Blick auf die Wand und einmal mit Blick auf die Referenzpunkte.

Für die Vermessung der Oberkante eines nach oben offenen Behälters ist es jedoch nicht erforderlich, die gesamte Oberfläche zu scannen, sondern nur das Naturmaß zu bestimmen, also eine Line am Rande eines "Rohres", eigentlich eines zylinderförmigen Behälters. Das Ergebnis ist dann nicht die Oberfläche der Wand in Relation zu Fixpunkten, sondern nur die Kreislinie mit der Information der Höhe relativ zum Standpunkt des Naturmaß-Scanners.

Stand der Technik ist nun, entweder nur mit Planmaßen zu arbeiten, was ein hohes Risiko für Nacharbeiten auf der Baustelle bis hin zur Neufertigung bei gravierenden Naturmaß-Abweichungen darstellt. Oder es wird mit erheblichem Aufwand mit mechanischen Messhilfen die Behälterkrone vermessen, wobei mit Leitern und Gerüsten gearbeitet werden muss, um die Behälterkrone zu erreichen. Gelegentlich wird auch von Gerüsten oder Leitern aus mit Laserentfernungsmessern der Abstand zur gegenüberliegenden Kronenseite angepeilt, wobei das Festlegen des gegenüberliegenden Punktes mit erheblichen Ungenauigkeiten verbunden ist und das Erreichen einer signifikanten Anzahl von Messpunkten vom Aufwand her nicht akzeptabel ist.

Die Notwendigkeit zur Verbesserung bzw. die Ziele der Erfindung ergeben sich nun daraus, dass gegenüber der bekannten Methode der Aufwand minimiert werden muss, im Falle von Arbeiten ohne Einrüstung der Sicherheitsstandard erhöht werden muss und die Messgenauigkeit gegenüber Maßband, Messlatte und Laserpeilung verbessert werden muss.

Erfindungsgemäß wird dies durch die Ausführung der folgenden Schritte erzielt:
- Festlegen einer festen Messposition innerhalb des Behälters,
- Berührungsloses Messen des Abstands zwischen der festen Messposition und der Oberkante des offenen Behälters an einer Vielzahl von Messpunkten entlang des Behälterumfangs,
- Berechnen der Koordinaten der Vielzahl der Messpunkte auf Basis der gemessenen Abstände und aus diesen den Verlauf der Oberkante.

Es wird somit erfindungsgemäß von einem festen Punkt im Inneren des Behälters aus mit bekannter Höhe über Grund aber in Bodennähe oder auf Befüllniveau systematisch der Abstand von diesem Punkt zur Behälterkrone vermessen und ausgewertet. Zur einfachen Ausführung ist es wichtig, dass der feste Punkt leicht zugänglich ist. Insbesondere kann der feste Punkt durch Aufstellung eines Stativs festgelegt werden. Im Falle des befüllten Behälters kann der feste Punkt auch durch einen Schlitten oder einen Schwimmer realisiert werden, der in das Behälterinnere eingebracht wird und durch Züge oder Gestänge fixiert wird. Bevorzugt wird ein berührungsloses Verfahren für die Vermessung der Behälterkrone verwendet.

Ein weiterer Vorteil des erfindungsgemäßen Verfahrens besteht darin, dass der Ablauf stark automatisiert werden kann. Dies wird gemäß einer weiteren Ausführungsform der Erfindung dadurch realisiert, dass die an der Oberkante des Behälters liegenden Messpunkte, welche zur Abstandsmessung herangezogen werden, dadurch bestimmt werden, dass an der jeweiligen Umfangsposition, die mit Bezug auf die Messposition einem zugehörigen Azimutwinkel entspricht, der Abstand von der Messposition zur Behälterwand in Abhängigkeit vom Polarwinkel mit Bezug auf die Messposition abgetastet wird, und dass als jeweiliger Messpunkt an der Oberkante des Behälters jene Stelle ermittelt wird, welche im Bereich des Übergangs zwischen einem endlichen Abstandswert und einem, um einen vorbestimmbaren Faktor größeren Abstandswert liegt.

Auf diese Weise können die Messpunkte an der Behälterkrone automatisch gefunden und die entsprechenden Abstandswerte in wählbarer Anzahl entlang der Behälterkrone vermessen werden. Die Automatisierung kann dadurch unterstützt werden, dass ein Algorithmus eine leicht verwertbare Auswertung aus den Rohdaten ermittelt.

Die Erfindung betrifft weiters eine Vorrichtung zur berührungslosen Vermessung der Oberkante eines nach oben offenen Behälters mit einem Entfernungsmesser zur berührungslosen Abstandsmessung.

Erfindungsgemäß werden die eingangs genannten Ziele dadurch erreicht, dass eine Vorrichtung zur Festlegung einer festen Messposition innerhalb des offenen Behälters vorgesehen ist, an der der Entfernungsmesser um eine erste und eine zweite Achse drehbar gelagert ist, wobei die erste Achse eine Azimutdrehung und die zweite Achse eine Polardrehung des Entfernungsmessers ermöglicht.

Durch den an einer festen Messposition befindlichen Entfernungsmesser, der um die erste und die zweite Achse drehbar ist, können beliebige Messpunkte auf der Oberkante des offenen Behälters vermessen und daraus deren Verlauf bestimmt werden.

In weiterer Ausbildung der Erfindung kann der Entfernungsmesser ein Laser-Entfernungsmesser sein, der ein berührungsloses Messen des Abstandes zwischen der festen Messposition innerhalb des offenen Behälters und beliebigen Punkten an der Oberkante des Behälters ermöglicht.

Zur datentechnischen Bestimmung der Entfernung kann der Entfernungsmesser einen Ausgang aufweisen, an dem die gemessenen Abstandswerte auslesbar sind, und dass der Ausgang des Entfernungsmessers an eine Ausgabe-Einheit angeschlossen ist.

Um den Vorgang der Behälterwand-Vermessung zu automatisieren kann der Entfernungsmesser einen Azimutantrieb zur Azimutwinkel-Einstellung und einen Polarwinkelantrieb zur Polarwinkel-Einstellung aufweisen.

Gemäß einer weiteren Ausführungsform der Erfindung kann vorgesehen sein, dass eine Steuereinheit zur Steuerung des Azimutantriebs und eine Steuereinheit zur Steuerung des Polarantriebs vorgesehen sind, wobei die Steuereinheit zur Steuerung des Azimutantriebs vorbestimmbare Azimutwinkel einstellt und die Steuereinheit zur Steuerung des Polarantriebs für jeden eingestellten Azimutwinkel unterschiedliche Polarwinkel anfährt und die Ausgabe-Einheit die vom Entfernungsmesser gemessene Entfernung zwischen der festen Messposition und der Behälterwand ausgibt, wobei als Abstand zur Oberkante jene endliche Entfernung ermittelt wird, bei der die Ausgabe-Einheit in dem zu einem der Polarwinkel benachbarten Winkelbereich eine um einen vorbestimmbaren Faktor größere Entfernung feststellt.

Der berührungslose Entfernungsmesser erkennt den Unterschied zwischen der Oberkante der Behälterwand und dem darüber befindlichen Freiraum, sodass der Abstand zur Oberkante festgestellt werden kann, indem durch Anfahren der Winkelpositionen unterschiedlicher Höhe bei fixer Winkelposition im Behälterkreis die Oberkante des Behälters gefunden und der Abstand vermessen wird. Durch Anfahren unterschiedlicher Winkelpositionen im Behälterkreis zur Durchführung dieser Abstandsmessung wird der gesamte Behälterrand vermessen.

Nachfolgend wird die Erfindung anhand des in Zeichnungen dargestellten Ausführungsbeispiels eingehend erläutert. Es zeigt dabei
Fig.1 einen Schnitt durch einen nach oben offenen Behälter mit einer darin positionierten Ausführungsform einer Vorrichtung zur Durchführung des erfindungsgemäßen Verfahrens und
Fig.2 eine Draufsicht auf die Vorrichtung gemäß Fig.1

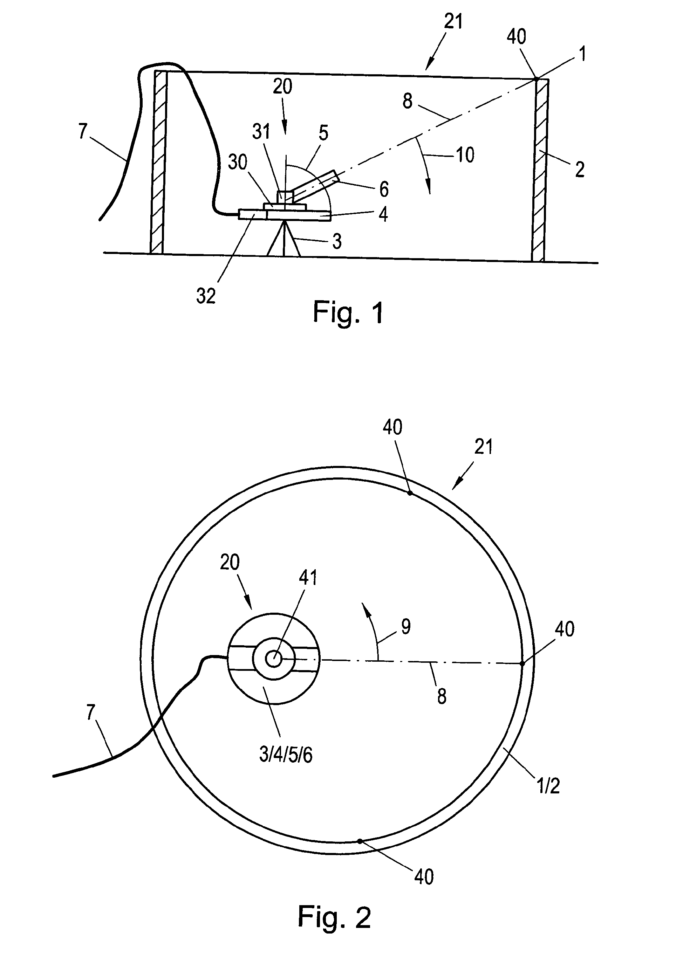

Fig.1 und 2 zeigen eine Vorrichtung zur Durchführung des erfindungsgemäßen Verfahrens zur berührungslosen Vermessung der Oberkante 1 einer Wand 2 eines nach oben offenen Behälters 21.

Innerhalb des Behälters 21 ist eine Vorrichtung zur Festlegung einer festen Messposition vorgesehen, die im gezeigten Ausführungsbeispiel durch ein Stativ 3 realisiert ist. Anstelle des Stativs 3 kann auch ein Schlitten oder ein Schwimmer auf einer Flüssigkeitsoberfläche vorgesehen sein, z.B. im Fall eines mit einer Flüssigkeit gefüllten Behälters, die entsprechend fixiert sind.

Die Abstandsmessung erfolgt durch einen Entfernungsmesser, der durch einen berührungslosen Laser-Entfernungsmesser 6 gebildet ist, der auf dem Stativ 3 angeordnet ist. Der Laser-Entfernungsmesser 6 ist um eine erste und eine zweite Achse drehbar gelagert, wobei die erste Achse eine Azimutdrehung (Azimutwinkel 9) und die zweite Achse eine Polardrehung (Polarwinkel 10) des Laser-Entfernungsmessers 6 ermöglicht.

Zu diesem Zweck weist der Laser-Entfernungsmesser 6 einen Azimutantrieb 4 zur Azimutwinkel-Einstellung und einen Polarwinkelantrieb 5 zur Polarwinkel-Einstellung auf.

Demzufolge muss der zu schwenkende Entferungsmesser auch kein teurer mehrdimensionaler Scanner sein, sondern es kann ein billiger eindimensionaler Entfernungsmesser verwendet werden. Da man aber nicht weiß, wo die Behälteroberkante 1 liegt, muss man um zwei Achsen schwenken.

Die Drehachse für die Azimutdrehung muss nur dann senkrecht stehen, wenn die Behälteroberkante 1 nicht waagrecht ist. Andernfalls kann auf die Achsneigung korrigiert werden.

Die mit Hilfe des Azimutantriebs 4 und des Polarantriebs 5 erreichbare Positionierung des Laser-Entfernungssmessers 6 kann z.B. durch Schrittmotoren mit Positionsrückmeldung oder durch Analogmotoren mit Winkelgeber erfolgen.

Die Spannungsversorgung der erfindungsgemäßen Vorrichtung kann durch einen nicht dargestellten elektrischen Speicher oder durch eine Verbindung mit einer Netz-Spannungsversorgung über eine Leitung 7 bereitgestellt sein.

Gemäß dem erfindungsgemäßen Verfahren werden die folgenden Schritte ausgeführt:
- Festlegen einer festen Messposition 41 innerhalb des Behälters 21,
- Berührungsloses Messen des Abstands zwischen der festen Messposition 41 und der Oberkante 1 des offenen Behälters 21 an einer Vielzahl von Messpunkten 40 entlang des Behälterumfangs, und
- Berechnen der Koordinaten der Vielzahl der Messpunkte 40 auf Basis der gemessenen Abstände und aus diesen den Verlauf der Oberkante 1.

Die an der Oberkante 1 des Behälters 21 liegenden Messpunkte 40, welche zur Abstandsmessung herangezogen werden, werden dadurch bestimmt, dass an der jeweiligen Umfangsposition, die mit Bezug auf die Messposition einem zugehörigen Azimutwinkel 9 entspricht, unterschiedliche Polarwinkel 10 angefahren werden und der Abstand von der Messposition 41 zur Behälterwand 2 gemessen wird, und dass als jeweiliger Messpunkt 40 an der Oberkante 1 des Behälters 21 jene Stelle ermittelt wird, welche im Bereich des Übergangs zwischen einem endlichen Abstandswert und einem, um einen vorbestimmbaren Faktor größeren Abstandswert liegt.

Die Achse des Polarwinkels 10 wird für einen festen Azimutwinkel 9 abgetastet, um den Übergang von Behälterwand 2 zu Himmel, Wolken oder z.B. Bäume oder Gebäude der Umgebung als Sprung zu einem signifikant größeren Entfernungswert zu detektieren. Findet ein Übergang der Entfernung von der Behälterwand 2 auf den Himmel statt, so wird der Entfernungsmesser 6 eine unendliche Entfernung messen, wodurch dieser Übergang sehr gut detektierbar ist. Wird der Hintergrund durch umliegende Gebäude oder Bäume gebildet, so kann der gemessene Abstand z.B. nur das Drei- Vier- oder Fünffache der Entfernung zur Behälterwand 2 sein. Entsprechend muss z.B. ein geeigneter vorbestimmbarer Schwellenwert definiert werden, z.B. das 1,5-fache oder Zweifache der Entfernung zur Behälterwand 2. Bei Überschreiten dieses Schwellenwertes liegt der Übergang von einem endlichen Abstandswert, der der Entfernung zur Behälterwand 2 entspricht, zu einem Abstand vor, der einem weit entfernten Objekt, gegebenenfalls einem unendlich weit entfernten Objekt entspricht. "Unendlich weit" sind alle Objekte entfernt, deren gemessener Abstand den Messbereich des Entfernungsmessers 6 überschreiten.

Fig.1 zeigt einen Laser-Strahl 8 des Entfernungsmessers 6, der beim schrittweisen Durchfahren des Polarwinkelkreises an der Oberkante 1 des Behälters 1 angelangt ist. Wird der Polarwinkel 10 weiter erhöht, so wird ― je nach Umgebungs-Hintergrund, z.B. Bäume oder Himmel - eine sehr große Entfernung oder die Entfernung "unendlich" (Messbereichsüberschreitung) gemessen, wodurch der vorherige Polarwinkel-Wert als die Position der Oberkante 1 ermittelt wird. Auf Basis dieses Polarwinkel-Werts und des zugehörigen Azimutwinkels sowie des festgestellten Abstands werden die Koordinaten der Oberkante 1 berechnet. Diese Berechnung erfolgt für eine Vielzahl von Azimutwinkel-Werten.

Die Achse des Azimutwinkels 9 wird somit abgefahren, um die Oberkante 40 Schritt für Schritt zu erfassen, wobei bei jedem Schritt der Übergang von Wand zu Umgebungs-Hintergrund, z.B. ein Gebäude oder Wolken am Himmel gefunden werden muss.

Der Laser-Entfernungsmesser 6 weist einen Ausgang auf, an dem die gemessenen Abstandswerte auslesbar sind, und der Ausgang des Entfernungsmessers 6 ist an eine Ausgabe-Einheit angeschlossen.

Dazu sind eine Steuereinheit 30 zur Steuerung des Azimutantriebs 4 und eine Steuereinheit 31 zur Steuerung des Polarantriebs 5 vorgesehen, wobei die Steuereinheit 30 zur Steuerung des Azimutantriebs 4 vorbestimmbare Azimutwinkel 9 einstellt und die Steuereinheit 31 zur Steuerung des Polarantriebs 5 für jeden eingestellten Azimutwinkel 9 unterschiedliche Polarwinkel 10 anfährt und die Ausgabe-Einheit die vom Entfernungsmesser gemessene Entfernung zwischen der festen Messposition 41 und der Behälterwand 1 ausgibt, wobei als Abstand zur Oberkante 1 jene endliche Entfernung ermittelt wird, bei der die Auswerte-Einheit in dem zu einem der Polarwinkel benachbarten Winkelbereich eine um einen vorbestimmbaren Faktor größere Entfernung oder eine unendliche Entfernung, d.h. eine Entfernung, die den Messbereich des Entfernungsmessers überschreitet, feststellt.

Die Steuerung der Steuereinheiten 30, 31 kann durch eine speicherprogrammierbare Steuerung mit Datenspeicher oder durch Verbindung zu einem Steuerungs-PC sowie über eine Ausleseschnittstelle oder durch eine Verbindung zum Auswertungs-PC erfolgen.

Alle bei der Vermessung auftretenden Daten, wie z.B. die durch den Laser-Entfernungsmesser 6 gemessenen Entfernungen und die zugehörigen Positionen des Azimutantriebs und des Polarantriebs werden z.B. durch ein Programm ausgewertet, dass die Antriebspositionen und die Entfernungsinformationen in einen Datensatz oder ein Datenblatt oder eine bemaßte Skizze überführt, die beispielsweise die Information des Behälterdurchmessers auf Höhe des Behälterrandes als Funktion des Winkels im Behälter angibt.

## Patentansprüche

1. Verfahren zur berührungslosen Vermessung der Oberkante (1) eines nach oben offenen Behälters (21), mit den folgenden Schritten:
- Festlegen einer festen Messposition (41) innerhalb des Behälters (21),
- Berührungsloses Messen des Abstands zwischen der festen Messposition (41) und der Oberkante (1) des offenen Behälters (21) an einer Vielzahl von Messpunkten (40) entlang des Behälterumfangs, und
- Berechnen der Koordinaten der Vielzahl der Messpunkte (40) auf Basis der gemessenen Abstände und aus diesen den Verlauf der Oberkante (1).

2. Verfahren nach Anspruch 1, **dadurch gekennzeichnet, dass** die an der Oberkante (1) des Behälters (21) liegenden Messpunkte (40), welche zur Abstandsmessung herangezogen werden, dadurch bestimmt werden, dass an der jeweiligen Umfangsposition, die mit Bezug auf die feste Messposition (41) einem zugehörigen Azimutwinkel (9) entspricht, unterschiedliche Polarwinkel (10) angefahren werden und der Abstand von der festen Messposition (41) zur Behälterwand (2) gemessen wird, und dass als jeweiliger Messpunkt (40) an der Oberkante (1) des Behälters (21) jene Stelle ermittelt wird, welche im Bereich des Übergangs zwischen einem endlichen Abstandswert und einem, um einen vorbestimmbaren Faktor größeren Abstandswert liegt.

3. Vorrichtung zur berührungslosen Vermessung der Oberkante (1) eines nach oben offenen Behälters (21) mit einem Entfernungsmesser (6) zur berührungslosen Abstandsmessung, **dadurch gekennzeichnet, dass** eine Vorrichtung zur Festlegung einer festen Messposition (41) innerhalb des offenen Behälters (21) vorgesehen ist, an der der Entfernungsmesser (6) um eine erste und eine zweite Achse drehbar gelagert ist, wobei die erste Achse eine Azimutdrehung und die zweite Achse eine Polardrehung des Entfernungsmessers (6) ermöglicht.

4. Vorrichtung nach Anspruch 3, **dadurch gekennzeichnet, dass** der Entfernungsmesser (6) ein Laser-Entfernungsmesser ist.

5. Vorrichtung nach Anspruch 3 oder 4, **dadurch gekennzeichnet, dass** der Entfernungsmesser (6) einen Ausgang aufweist, an dem die gemessenen Abstandswerte auslesbar sind, und dass der Ausgang des Entfernungsmessers (6) an eine Ausgabe-Einheit angeschlossen ist.

6. Vorrichtung nach Anspruch 3, 4 oder 5, **dadurch gekennzeichnet, dass** der Entfernungsmesser (6) einen Azimutantrieb (4) zur Azimutwinkel-Einstellung aufweist.

7. Vorrichtung nach einem der Ansprüche 3 bis 6, **dadurch gekennzeichnet, dass** der Entfernungsmesser (6) einen Polarwinkelantrieb (5) zur Polarwinkel-Einstellung aufweist.

8. Vorrichtung nach einem der Ansprüche 6 oder 7, **dadurch gekennzeichnet, dass** eine Steuereinheit zur Steuerung des Azimutantriebs (4) und eine Steuereinheit zur Steuerung des Polarantriebs (5) vorgesehen sind, wobei die Steuereinheit zur Steuerung des Azimutantriebs (4) vorbestimmbare Azimutwinkel (9) einstellt und die Steuereinheit zur Steuerung des Polarantriebs (5) für jeden eingestellten Azimutwinkel unterschiedliche Polarwinkel (10) anfährt und die Ausgabe-Einheit die vom Entfernungsmesser gemessene Entfernung zwischen der festen Messposition (41) und der Behälterwand (2) ausgibt, wobei als Abstand zur Oberkante (1) jene endliche Entfernung ermittelt wird, bei der die Ausgabe-Einheit in dem zu einem der Polarwinkel (10) benachbarten Winkelbereich eine um einen vorbestimmbaren Faktor größere Entfernung feststellt.
